# FASCICULE DE BREVET EUROPEEN

(11) **EP 1 711 536 B1**
(45) Date de publication et mention de la délivrance du brevet: **23.04.2008**
(21) Numéro de dépôt: 05717546.5
(22) Date de dépôt: 03.02.2005
(51) Int. Cl.: C08F 2/38, C08F 2/24, C08F 4/00, C08F 293/00

(54) **PROCEDE DE POLYMERISATION RADICALAIRE EN EMULSION METTANT EN OEUVRE DES ALCOXYAMINES HYDROSOLUBLES**
VERFAHREN ZUR RADIKALISCHEN EMULSIONSPOLYMERISATION UNTER VERWENDUNG VON WASSERLÖSLICHEN ALKOXYAMINEN
METHOD FOR RADICAL EMULSION POLYMERISATION USING HYDROSOLUBLE ALKOXYAMINES

(30) Priorité: 06.02.2004 FR 0401150
(43) Date de publication de la demande: 18.10.2006
(73) Titulaire: ARKEMA FRANCE, 92700 Colombes (FR)
(72) Inventeur: CHARLEUX, Bernadette, F-94300 Vincennes (FR); GUERRET, Olivier, 69890 La Tour de Salvagny (FR); MAGNET, Stéphanie, F-64370 Morlanne (FR); NICOLAS, Julien, F-92250 La Garenne Colombes (FR)
(74) Mandataire: Lhoste, Catherine
(86) Numéro de dépôt international: PCT/FR2005/000234
(87) Numéro de publication internationale: WO 2005/082945

(56) Documents cités:
- EP-A- 1 526 138
- FR-A- 2 848 557
- C. TANG ET AL.: "Preparation of polyacrylonitrile-block-poly (n-butyl acrylate) copolymers using ATRP and nitroxide mediated polymerization processes" MACROMOLECULES, vol. 36, no. 5, 2 juillet 2003 (2003-07-02), pages 1465-1473, XP002291755
- T. DIAZ ET AL.: "controlled polymerization of functional monomers and synthesis of block copolymers using beta-phosphonylated nitroxide" MACROMOLECULES, vol. 36, no. 7, 3 novembre 2003 (2003-11-03), pages 2235-2241, XP002291756
- K. SCHIERHOLZ: "acrylamide-based amphiphilic block copolymers via nitroxide-mediated radical polymerization" MACROMOLECULES, vol. 36, no. 16, 7 décembre 2003 (2003-12-07), pages 5995-5999, XP002291757

## Description

### DOMAINE TECHNIQUE

L'invention concerne un procédé de polymérisation d'au moins un monomère polymérisable par voie radicalaire en émulsion, micro-émulsion ou mini-émulsion mettant en oeuvre une alcoxyamine hydrosoluble.

### TECHNIQUE ANTERIEURE

EP 970.973 décrit un procédé de polymérisation d'au moins un monomère polymérisable par voie radicalaire en émulsion en présence d'un radical libre stable, tel que le 2,2,6,6 tétra méthyl 1-pipéridinyloxy, généralement commercialisé sous la marque TEMPO ou l'un de ses dérivés, et d'un agent émulsifiant, la polymérisation étant amorcée par un agent amorceur de polymérisation, de préférence hydrosoluble choisi parmi les peroxydes et hydroperoxydes organiques, les dérivés azoïques, les sels métalliques et ammoniacaux du persulfate, les couples redox.

Marestin C., Noël C., Guyot A., Claverie J., Macromolecules, 1998, 31(12), 4041-4044 décrivent un procédé de polymérisation radicalaire contrôlée du styrène en émulsion en présence d'un dérivé amino-TEMPO représenté par la formule (A) ci-dessous, 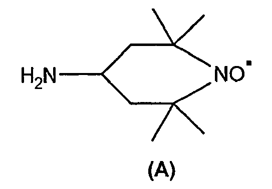 d'un initiateur hydrosoluble de type persulfate et de tensioactifs de type SDS ou SDBS. Ce procédé conduit à l'obtention de latex stables dont les taux de solides sont de l'ordre de 10% et qui présentent une répartition bimodale de taille de particules. Cependant, même à 130°C, on constate que les cinétiques de polymérisation sont très lentes et la conversion du styrène atteint péniblement 70% après 55 heures de polymérisation !

Cao J., He J., Li C. and Yang Y., Polym. J, 2001, 33, 75 décrivent un autre exemple de polymérisation radicalaire contrôlée du styrène en émulsion avec plusieurs dérivés du TEMPO qui permet d'obtenir des latex stables à 120°C dont la distribution des tailles de particules est monomodale.

Néanmoins on constate que l'utilisation de dérivés du TEMPO se limite au contrôle des monomères styréniques.

Dans la littérature, outre des procédés de polymérisations radicalaire contrôlée dont l'amorçage, mis en oeuvre en phase aqueuse, fait appel à des systèmes d'amorçage bi-composants dont l'agent de contrôle est le TEMPO ou l'un de ses dérivé, sont également décrits des procédés de polymérisation radicalaire contrôlée dont l'amorçage fait appel à un dérivé du N-tertio-1-diéthyl phosphono-2,2-diméthyl propyl nitroxyde (SG1) et l'amorceur ou initiateur de polymérisation étant un amorceur hydrosoluble de type persulfate, diazoïque ou peroxyde :

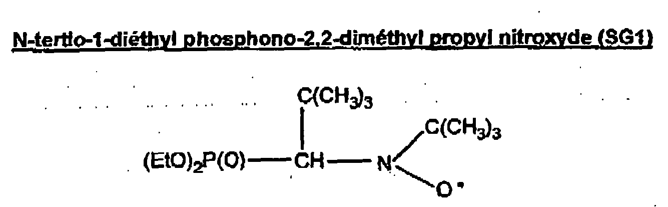

WO 00/49027 décrit un procédé de polymérisation radicalaire de monomères styréniques et acrylates en milieu solvant, masse ou mini-émulsion en présence d'alcoxyamines organosolubles dérivées du SG1 répondant à la formule (B) ci-dessous.

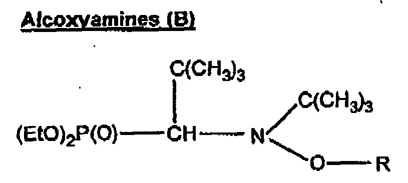

### EXPOSE DE L'INVENTION

Le procédé de polymérisation d'au moins un monomère polymérisable par voie radicalaire en micro-émulsion ou émulsion selon l'invention est mis en oeuvre en présence d'au moins une alcoxyamine hydrosoluble, choisie parmi
une monoalcoxyamine de formule (I) 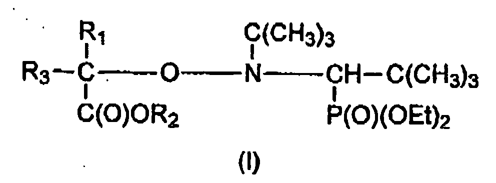 dans laquelle
* R₁ et R₃, identiques ou différents, représentent un radical alkyle, linéaire ou ramifié, ayant un nombre d'atomes de carbone allant de 1 à 3,
* R₂ représente un métal alcalin tel que Li, Na, K, un ion ammonium tel que NH₄⁺, NBu₄⁺, NHBu₃⁺(Bu étant l'abréviation de butyle)
ou une mono- ou une polyalcoxyamine de formule (II) 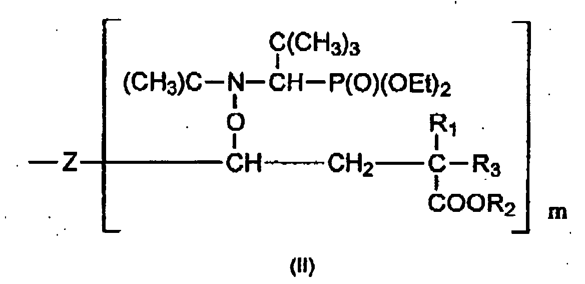 où est un entier supérieur ou égal à 1, de préférence supérieur ou égal à 2,
et R₁, R₂ et R₃ ont la même signification que dans la formule (I)

Le milieu de polymérisation comprend une phase organique liquide et une phase aqueuse liquide, ladite phase organique liquide comprenant de préférence plus de 50% en poids de monomères(s) à polymériser et ladite phase aqueuse comprenant de préférence au moins 50 % en poids d'eau.

Le procédé de la présente invention permet d'accéder à des latex de (co)polymères à architectures macromoléculaires contrôlées.

Sans que la demanderesse soit tenue à une quelconque explication, elle pense que les alcoxyamines hydrosolubles de formule (I) et/ou (II) jouent à la fois le rôle d'agent amorceur et d'agent émulsifiant dans le procédé selon l'invention ; ainsi, les propriétés tensioactives des alcoxyamines hydrosolubles de formule (I) et/ou (II) permettent de modérer, voire même d'éviter l'emploi d'autres tensioactifs dans ledit procédé d'émulsion, ou micro-émulsion.

Par alcoxyamine hydrosoluble au sens de la présente invention, on entend toute alcoxyamine de formule (I) ou (II) dont la solubilité dans la phase aqueuse est d'au moins 1 g/l à 25 °C.

L'alcoxyamine peut être introduite dans le milieu de polymérisation à raison de 0,01 % à 10 %, de préférence 0,1 à 5 %, en masse par rapport à la masse de monomère(s).

Par monomère, on entend tout monomère polymérisable ou copolymérisable par voie radicalaire. Le terme monomère recouvre bien entendu les mélanges de plusieurs monomères.

Le monomère peut être choisi parmi les monomères présentant une double liaison carbone-carbone susceptible de polymériser par voie radicalaire, tels que les monomères vinyliques, vinylidéniques, diéniques et oléfiniques, allyliques, acryliques, méthacryliques, etc.

Les monomères considérés peuvent notamment être choisis parmi les monomères vinylaromatiques tels que le styrène ou les styrènes substitués notamment l'α-méthylstyrène et le styrène sulfonate de sodium, les diènes tels que le butadiène ou l'isoprène, les monomères acryliques tel que l'acide acrylique ou ses sels, les acrylates d'alkyle, de cycloalkyle ou d'aryle tels que l'acrylate de méthyle, d'éthyle, de butyle, d'éthylhexyle ou de phényle, les acrylates d'hydroxyalkyle tel que l'acrylate de 2-hydroxyéthyle, les acrylates d'étheralkyle tel que l'acrylate de 2-méthoxyéthyle, les acrylates d'alcoxy- ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxy-polyéthylèneglycol-polypropylèneglycol ou leurs mélanges, les acrylates d'aminoalkyle tel que l'acrylate de 2-(diméthylamino)éthyle (ADAME), les acrylates de sel d'amines tels que le chlorure ou le sulfate de [2-(acryloyloxy)éthyl]triméthylammonium ou le chlorure ou le sulfate de [2-(acryloyloxy)éthyl]diméthylbenzylammonium, les acrylates fluorés, les acrylates silylés, les acrylates phosphorés tels que les acrylates de phosphate d'alkylèneglycol, les monomères méthacryliques comme l'acide méthacrylique ou ses sels, les méthacrylates d'alkyle, de cycloalkyle, d'alkényle ou d'aryle tels que le méthacrylate de méthyle, de lauryle, de cyclohexyle, d'allyle ou de phényle, les méthacrylates d'hydroxyalkyle tel que le méthacrylate de 2-hydroxyéthyle ou le méthacrylate de 2-hydroxypropyle, les méthacrylates d'étheralkyle tel que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxypolyethylèneglycol-polypropylèneglycol ou leurs mélanges, les méthacrylates d'aminoalkyle tel que le méthacrylate de 2-(diméthylamino)éthyle (MADAME), les méthacrylates de sel d'amines tels que le chlorure ou le sulfate de [2-(méthacryloyloxy)éthyl]triméthylammonium ou le chlorure ou le sulfate de [2-(méthacryloyloxy)éthyl]diméthylbenzylammonium, les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, l'acrylamide ou les acrylamides substitués, la 4-acryloylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide ou les méthacrylamides substitués, le N-méthylolméthacrylamide, le chlorure de méthacrylamidopropyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, les (alkoxy) poly(alkylène glycol) vinyl éther ou divinyl éther, tels que le méthoxy poly(éthylène glycol) vinyl éther, le poly(éthylène glycol) divinyl éther, les monomères oléfiniques, parmi lesquels on peut citer l'éthylène, le butène, l'hexène et le 1-octène ainsi que les monomères oléfiniques fluorés, et les monomères vinylidénique, parmi lesquels on peut citer le fluorure de vinylidène, seuls ou en mélange d'au moins deux monomères précités.

Il est possible d'ajouter au milieu de polymérisation au moins un agent émulsifiant, c'est-à-dire un tensioactif permettant de stabiliser l'émulsion, étant entendu que ledit agent émulsifiant n'est pas une alcoxyamine au sens de la présente invention. Tout agent émulsifiant habituel à ce genre d'émulsion peut être utilisé.

L'agent émulsifiant peut être anionique, cationique ou non ionique. L'agent émulsifiant peut être un tensioactif amphotère ou quaternaire ou fluoré. Il peut être choisi parmi les sulfates d'alkyle ou d'aryle, les sulfonates d'alkyle ou d'aryle, les sels d'acide gras, les alcools polyvinyliques, les alcools gras polyéthoxylés. A titre d'exemple, l'agent émulsifiant peut être choisi dans la liste suivante :
- laurylsulfate de sodium,
- dodécylbenzenesulfonate de sodium,
- stéarate de sodium,
- nonylphénolpolyéthoxylé,
- dihexylsulfosuccinate de sodium,
- dioctylsulfosuccinate de sodium,
- bromure de lauryl diméthyl ammonium,
- lauryl amido bétaine,
- perfluoro octyl acétate de potassium.

L'agent émulsifiant peut également être un copolymère amphiphile à blocs ou statistique ou greffé, comme les copolymères du styrène sulfonate de sodium et en particulier le polystyrène-b-poly(styrène sulfonate de sodium) ou tout copolymère amphiphile préparé par toute autre technique de polymérisation.

L'agent émulsifiant peut être introduit dans le milieu de polymérisation à raison de 0,1% à 10 % en masse par rapport à la masse de monomère(s).

Le polymère hydrophobe doit être soluble dans la phase organique, présente de préférence une solubilité dans l'eau à 25 °C inférieure à 1.10⁻⁶ g/litre et présente une masse moléculaire moyenne en poids au moins égale à 100.000, par exemple allant de 100.000 à 400.000. A titre d'exemple, le polymère hydrophobe peut être le polystyrène, le polyméthacrylate de méthyle, le polyacrylate de butyle.

Le polymère hydrophobe peut être introduit dans l'émulsion à raison de 0,5 à 2 % en poids par rapport au monomère à polymériser.

Par micro-émulsion, on entend une émulsion telle que définie par exemple dans les publications de Candau, F. Microemulsion polymerization. NATO ASI Series, Series E: Applied Sciences (1997), 335(Polymeric Dispersions: Principles and Applications), 127-140.; de Morgan, John D. Microemulsion polymerization. Recent Research Developments in Macromolecules Research (1998), 3(Pt. 2), 551-592; de Capek, Advances in Colloid and Interface Science, 82(1999) 253-273 et 92(20011) 195-233.

L'émulsion ou la micro-émulsion peut être réalisée par mélange sous agitation, à cisaillement plus ou moins élevé, d'une phase aqueuse comprenant :
- de l'eau,
- au moins une alcoxyamine hydrosoluble de type (I) et/ou (II) telle que définie précédemment
- éventuellement un agent émulsifiant,
et d'une phase organique comprenant
- le(s) monomère(s),
- un éventuel solvant organique.

Les températures de polymérisation dépendent des monomères présents dans le milieu. Ainsi pour initier la polymérisation de méthacrylate à partir des alcoxyamines (I) et/ou (II), on préfère une température de polymérisation comprise entre 10 et 80 °C, pour les autres monomères, on choisit une température comprise en général entre 50 °C et 130°C. Le procédé selon l'invention est mené à une pression suffisante pour éviter l'ébullition des phases de l'émulsion et pour que ses différents constituants restent essentiellement dans l'émulsion (minimisation du passage en phase vapeur des différents constituants).

Le procédé de polymérisation selon l'invention mène à un latex de polymère. Au sein de ce latex, l'ensemble des particules de polymère présente un diamètre moyen inférieur à 2 µm, généralement compris entre 0,01 µm et 1 µm.

Les polymères obtenus sont des polymères vivants porteurs de fonctions alcoxyamines. Ils peuvent être eux même réengagés une ou plusieurs fois dans un procédé de polymérisation radicalaire avec les monomères précités pour conduire à des copolymères à blocs.

Le procédé selon l'invention permet donc la préparation de polymères à blocs. En effet, la polymérisation d'un premier monomère par le procédé selon l'invention mène à un bloc de polymère vivant. Il est alors possible de raccorder à ce premier bloc, un bloc d'un autre polymère en plaçant le premier bloc de polymère vivant dans un milieu de polymérisation d'un second monomère. Il est ainsi possible de réaliser des copolymères à blocs, par exemple, des copolymères comprenant un ou plusieurs blocs de polystyrène et un ou plusieurs blocs de polybutadiène, ou des copolymères comprenant un ou plusieurs blocs de polystyrène et un ou plusieurs blocs du type méthacrylate et un ou plusieurs blocs du type acrylate.

En pratique, la réalisation des blocs peut se faire à la suite les uns des autres, dans le même appareillage. Lorsque le premier monomère est consommé de façon à réaliser le premier bloc, il suffit d'introduire le second monomère destiné à la réalisation du second bloc, sans arrêter l'agitation et sans refroidissement ou autre interruption. Bien entendu, suivant la nature des monomères, les conditions de constitution de chacun des blocs, comme la température de l'émulsion, pourra être adaptée.

Bien entendu, il est possible d'accoler autant de blocs que l'on souhaite au polymère vivant en plaçant celui-ci dans un milieu de polymérisation d'un monomère dont on souhaite constituer un bloc.

Ainsi, l'invention concerne également un procédé de préparation d'un polymère à blocs comprenant au moins une étape selon l'invention, menant à un premier bloc vivant, ledit bloc vivant étant ensuite placé en présence d'au moins un autre monomère dont on souhaite constituer un bloc accolé au premier bloc, de façon à former un dibloc vivant, et ainsi de suite, suivant le nombre de blocs que l'on souhaite réaliser.

Ainsi, la présente demande concerne également un procédé de préparation d'un polymère dibloc comprenant une étape de polymérisation d'un premier monomère conformément à l'invention, de façon à obtenir un premier bloc vivant, suivie d'une étape au cours de laquelle le premier bloc vivant est placé en présence d'un second monomère que l'on polymérise de façon à former un second bloc accolé au premier bloc.

La présente demande concerne donc également un procédé de préparation d'un polymère multibloc comprenant une ou plusieurs étapes de polymérisation d'autres monomères en présence du polymère dibloc préparé conformément à ce qui vient d'être dit, de façon à former un troisième bloc accolé au polymère dibloc. Ce procédé de reprise de bloc peut être répété le nombre de fois nécessaire pour atteindre le nombre de blocs voulu.

A titre d'exemple, les polymères à blocs suivants peuvent être réalisée :
polystyrène-b-polyméthacrylate de méthyle,
polystyrène-b-polystyrènesulfonate,
polystyrène-b-polyacrylamide,
polystyrène-b-polyméthacrylamide,
polyméthacrylate de méthyle-b-polyacrylate d'éthyle,
polystyrène-b-polyacrylate de butyle,
polybutadiène-b-polyméthacrylate de méthyle,
polyisoprène-b-polystyrène-co-acrylonitrile,
polybutadiène-b-polystyrène-co-acrylonitrile,
polystyrène-co-acrylate de butyle-b-polyméthacrylate de méthyle,
polystyrène-b-polyacétate de vinyle,
polystyrène-b-polyacrylate de 2-hexyléthyle,
polystyrène-b-polyméthacrylate de méthyle-co-acrylate d'hydroxyéthyle,
polystyrène-b-polybutadiène-b-polyméthacrylate de méthyle,
polybutadiène-b-polystyrène-b-polyméthacrylate de méthyle,
polystyrène-b-polyacrylate de butyle-b-polystyrène,
polystyrène-b-polybutadiène-b-polystyrène,
polystyrène-b-polyisoprène-b-polystyrène,
polyacrylate de perfluorooctyle-b-polyméthacrylate de méthyle,
polyacrylate de perfluorooctyle-b-polystyrène,
polyacrylate de perfluorooctyle-b-acrylate de behenyle,
polyacrylate de perfluorooctyle-b-méthacrylate de stéaryle,
polyacrylate de n-octyle-b-méthacrylate de méthyle,
polyméthacrylate de méthyle-b-polyacrylate de butyle-b-polyméthacrylate de méthyle,
polyméthacrylate de méthyle-b-polyacrylate de méthoxyéthyl-b-polyacrylate de méthyle,
polyacide (méth)acrylique-b-polyacrylate de butyle-b-polyacide(méth)acrylique.

Dans le cadre de la présente invention, le terme polymère ou de bloc polymère est à prendre en leur sens général, de sorte qu'il recouvre les homopolymères, copolymères, terpolymères et mélanges de polymère. Le terme polymérisation est à prendre en un sens aussi général.

En fonction du type de monomère(s) (co)polymérisé(s), le pH de la phase aqueuse peut être imposé. Dans le cas de conditions de polymérisation de pH>8, on préfère utiliser les alcoxyamines (I) et/ou (II) pour lesquelles R2 est un atome alcalin. L'alcoxyamine est alors introduite dans le milieu réactionnel via une solution aqueuse de concentration 10⁻¹ Mol.l⁻¹ de pH=9. Dans le cas de conditions de polymérisation de pH<6, on pourra préférer un alcoxyamine (I) et/ou (II) dont R2 est un ion ammonium. Dans le cas où l'on désire maintenir un pH compris entre 6 et 7, on utilisera n'importe quelle alcoxyamine (I) et/ou (II) ajoutant dans la phase aqueuse une quantité tampon, par exemple d'hydrogénocarbonate de calcium. De manière intéressante, les polymérisations se déroulant à pH faible (<5) sont en général plus rapides mais moins bien contrôlées que celles se déroulant à pH >5.

La présente invention revendique aussi la possibilité de convertir les monomères résiduels de l'une des étapes décrites précédemment en utilisant un apport supplémentaire d'initiateur(s) de radicaux libres de type peroxydique organique et/ou minéral et/ou de type azoïque. La différence essentielle avec le procédé de polymérisation décrit précédemment est qu'au lieu d'effectuer toute la conversion (polymérisation) des monomères par polymérisation radicalaire contrôlée, on commence en radicalaire contrôlée et on termine la polymérisation en polymérisation radicalaire conventionnelle (i-e avec des peroxydes, des persulfates, des azoïques et/ou leurs équivalents). Les monomères qu'on polymérise en radicalaire conventionnelle peuvent être déjà présents au cours de la polymérisation radicalaire contrôlée et n'avoir pas été convertis ou bien on les ajoute dans la solution aqueuse contenant la partie du dispersant déjà préparée par polymérisation radicalaire contrôlée ou bien encore selon une combinaison de ces alternatives. Pour effectuer cette polymérisation radicalaire conventionnelle, on ajoute dans la solution aqueuse contenant la partie du dispersant déjà préparée par polymérisation radicalaire contrôlée, des générateurs de radicaux classiques bien connus de l'homme du métier et utilisés fréquemment lors des réactions de polymérisation radicalaire classique en milieu aqueux. Parmi ces générateurs de radicaux, on peut citer de manière non exclusive, les sels métalliques et ammoniacaux du persulfate, tels que le persulfate de sodium, le persulfate de potassium et le persulfate d'ammonium, les amorceurs azoïques hydrosolubles tels que le 2,2'-Azobis (2-amidinopropane) dihydrochlorure et les sels métalliques et ammoniacaux de l'acide 4,4' Azobis(4-cyanopentanoïque), les couples redox tels que le couple persulfate (de sodium, potassium ou ammonium)/vitamine C ou le couple persulfate/métabisulfite de sodium ou potassium ou le couple eau oxygénée/sels de l'ion ferreux ou le couple tertiobutyle hydroperoxyde/sulfoxylate de sodium, ainsi que toute autre combinaison possible oxydant(s)/réducteur(s). Lorsque la quantité de monomères résiduels à convertir après la réaction de polymérisation radicalaire contrôlée est considérable, l'utilisation d'amorceurs de polymérisation radicalaire classique conduira à des solutions ou dispersions aqueuses d'un mélange de copolymères d'origines différentes, ceux obtenus par polymérisation radicalaire classique et ceux obtenus par polymérisation radicalaire contrôlée. Pour cette étape de polymérisation radicalaire classique, il n'est pas exclu d'utiliser des agents de transfert de chaîne comme ceux utilisés classiquement dans la polymérisation radicalaire classique en milieu aqueux, même si, avantageusement, on n'en utilise pas. Parmi les agents de transfert utilisés dans des polymérisations radicalaires classiques, on peut citer, à titre non exclusif, l'isopropanol, les mercaptans hydrosolubles comme l'acide thioglycolique ou l'acide mercaptopropionique ou le mercapto-éthanol.

Dans les exemples qui suivent, les techniques de caractérisation suivantes ont été utilisées :
- conversion de monomère en polymère : par mesure de l'extrait sec, rapporté à la masse de monomère engagée,
- diamètre moyen des particules : par diffusion de la lumière (appareil Malvern Zeta Sizer 4),
- masses moléculaires et polydispersité des polymères : par chromatographie d'exclusion stérique après lavage du polymère à l'eau pour le débarrasser des espèces hydrosolubles. Un chromatographe "Waters" a été utilisé, le tétrahydrofurane (THF) servant d'éluant. Le chromatographe était équipé de quatre colonnes de PL gel® 10 µm (poly(styrène)divinylbenzène) de 100, 500, 1.000 et 10.000 Å, et d'un double détection (réfractomètre, et UV à 254 nm). L'étalonnage a été réalisé avec des échantillons de polystyrène standards. Les polymères étaient injectés à 10 mg/ml pour un débit de 1 ml/min.

### MANIERES DE REALISER L'INVENTION

### Exemple 1 A - Préparation de l'acide 2-méthyl-2-[N-tertiobutyl-N-(diéthoxyphosphoryl-2,2-dimé-thylpropyl)aminoxy]propionique

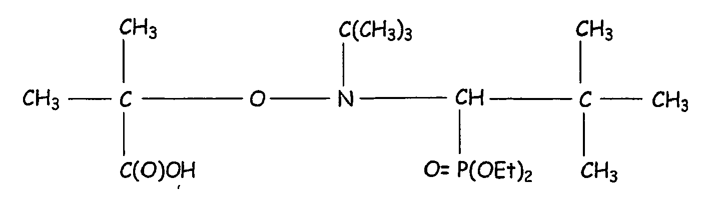

### ➢ mode opératoire :

Dans un réacteur en verre de 2 l purgé à l'azote, on introduit 500 ml de toluène dégazé, 35,9 g de CuBr (250 mmol), 15,9 g de cuivre en poudre (250 mmol), 86,7 g de N,N,N',N',N"-pentaméthyl-diéthylènetriamine-PMDETA-(500 mmol) puis, sous agitation et à température ambiante (20°C), on introduit un mélange contenant 500 ml de toluène dégazé, 42,1 g d'acide 2-bromo-2-méthylpropionique (250 mmol) et 78,9 g de SG1 à 84 % soit 225 mmol.

On laisse réagir 90 min à température ambiante et sous agitation, puis on filtre le milieu réactionnel. Le filtrat toluénique est lavé deux fois avec 1,5 I d'une solution aqueuse saturée en NH₄Cl.

On obtient un solide jaunâtre qui est lavé au pentane pour donner 51 g d'acide 2-méthyl-2-[N-tertiobutyl-N-(diéthoxyphosphoryl-2,2-diméthylpropyl)aminoxy]propionique (rendement 60 %).

Les résultats analytiques sont donnés ci-après :
- masse molaire déterminée par spectrométrie de masse : 381,44 / g.mol⁻¹ (pour C₁₇H₃₆NO₆P)
- analyse élémentaire (formule brute : C₁₇H₃₆NO₆P) :
% calculé : C=53,53, H=9,51, N=3,67
% trouvé : C=53,57, H=9,28, N=3,77

- fusion effectuée sur appareil Büchi B-540 : 124°C / 125°C 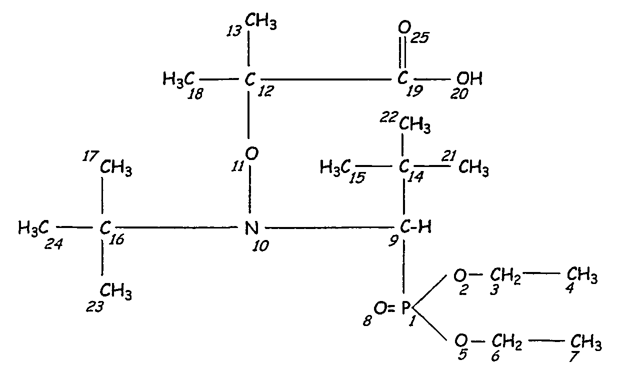
● RMN ³¹P (CDCl₃) : δ27,7
● RMN ¹H (CDCl₃) :
δ 1,15 (singulet, 9H sur carbones 15, 21 et 22),
δ 1,24 (singulet, 9H sur carbones 17, 23 et 24),
δ 1,33-1,36 (multiplet, 6H sur carbones 4 et 7),
δ 1,61 (multiplet, 3H sur carbone 18),
δ 1,78 (multiplet, 3H sur carbone 13),
δ 3,41 (doublet, 1 H sur carbone 9),
δ 3,98-4,98 (multiplet, 4H sur carbone 3 et 6)
δ 11,8 (singulet -OH).

● RMN ¹³C (CDCl₃) :

| N° atome de carbone | δ |
|---|---|
| 3 et 6 | 60,28 - 63,32 |
| 9 | 69,86 |
| 12 | 63 |
| 13 | 28,51 |
| 14 | 36,04 |
| 15, 21 et 22 | 29,75 |
| 16 | 63,31 |
| 17, 23 et 24 | 28,74 |
| 18 | 24,08 |
| 19 | 176,70 |

kd (120°C) = 0,2 s⁻¹.

A une suspension aqueuse de cette alcoxyamine, sont additionnés lentement à température ambiante et sous agitation magnétique, 1,7 équivalents d'une solution de soude caustique. L'agitation est maintenue 30 min à température ambiante, et l'alcoxyamine (I) où R₂ = Na est utilisée tel quel dans les exemples suivants.

Analyse élémentaire (formule brute C₁₇H₃₅NO₆PNa)
Pourcentage calculé : C = 50,61 ; H = 8,74 ; N = 3,47
Pourcentage trouvé : C = 49,29 ; H = 8,97 ; N = 3,01
kd (120°C) = 0,2 s⁻¹ 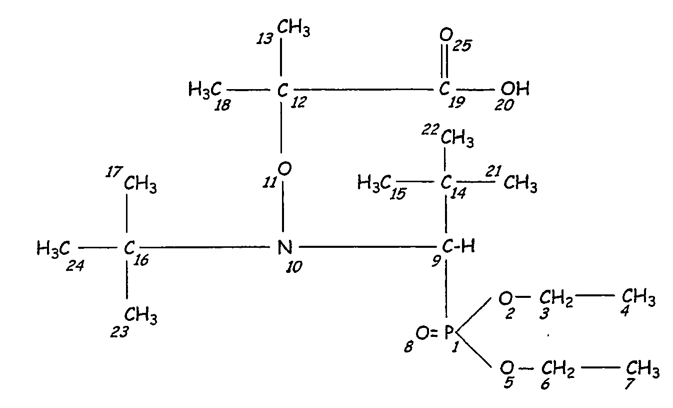
• RMN ³¹P (C₆D₆) : δ 28,05
• RMN ¹H (C₆D₆) :
δ 1,24-1,48 (massif, 24H sur carbones 4, 7, 15, 17, 21 et 24),
δ 1,91 (singulet, 3H sur carbone 18),
δ 2,07 (singulet, 3H sur carbone 13),
δ 3,43 (doublet, 1H sur carbone 9),
δ 4,15-4,6 (massif, 4H sur carbone 3 et 6)

• RMN ¹³C (C₆D₆) :

| N° atome de carbone : | δ |
|---|---|
| 3,6 | 61,33-61,42 |
| 4,7 | 16,55-16,70 |
| 9 | 71,08 |
| 12 | 86,36 |
| 13/18 | 24-29,10 |
| 14 | 36,24 |
| 15,21 et 22 | 30,23 |
| 16 | 62,42 |
| 17,28 et 24 | 29,27 |
| 19 | 180,74 |

### Exemple 1 B - Préparation d'une dialcoxyamine à partir de la monoalcoxyamine obtenue en 1 A

Dans un ballon de 100 ml purgé à l'azote, on introduit :
- 2 g d'alcoxyamine préparée sous 1 A (2 équivalents)
- 0,52 g de 1,4-butanediol diacrylate de pureté >98 % (1 équivalent)
- 6,7 ml d'éthanol

On chauffe à reflux (température 78°C) pendant 20 h, puis l'éthanol est évaporé sous vide. On obtient 2,5 g d'une huile jaune très visqueuse.

L'analyse RMN ³¹P montre la disparition totale de l'acide 2-méthyl-2-[N-tertiobutyl-N-(diéthoxyphosphoryl-2,2-dimé-thylpropyl)aminoxy]propionique (27,4 ppm) et l'apparition de la dialcoxyamine (multiplet à 24,7-25,1 ppm)

L'analyse par spectrométrie de masse de type electrospray montre la masse 961 (M+).

### Exemple 2 Mesure de la concentration micellaire critique (CMC) de l'alcoxyamine (1) préparée en 1 A

Dans l'optique de mieux caractériser le comportement tensioactif de l'alcoxyamine (I) où R₂ = Na, les cinétiques d'abaissement de la tension interfaciale de cette alcoxyamine dissoute dans l'eau ont été observées en fonction de sa concentration. Ont ainsi été évalués la valeur de sa concentration micellaire critique (cmc), du taux de recouvrement et de l'aire par molécule d'alcoxyamine adsorbée à l'interface.

L'interface contre laquelle nous avons choisi de travailler est l'air. Les mesures réalisées dans l'air pour l'alcoxyamine (I) où R₂ = Na sont comparées aux valeurs obtenues pour des tensioactifs classiques de type SDS (dodécylbenzènesulfonate de sodium)

Pour mesurer les tensions interfaciales, un tensiomètre à goutte commercialisé par ITC Concept a été utilisé. Le principe est le suivant. Une goutte est formée automatiquement à l'extrémité de l'aiguille d'une seringue dans une cuve remplie d'un autre liquide. La goutte est éclairée par une source lumineuse uniforme. L'image du profil de la goutte est projetée par un objectif télécentrique sur une caméra CCD, puis numérisée. Elle est ensuite traitée par le logiciel Windrop 1.1 pour déterminer la tension interfaciale, la surface et le volume de la goutte via l'équation de Laplace-Young. On peut ainsi suivre en fonction du temps les variations de la tension interfaciale γ_{30 min} lors, par exemple, de l'adsorption d'un tensioactif à l'interface de deux liquides (cinétique d'abaissement de la tension interfaciale) et ainsi déterminer plusieurs de ses caractéristiques comme la concentration micellaire critique (CMC), le taux de recouvrement (G), l'aire par molécule de tensioactif à l'interface (a) etc.

Le tableau 1 regroupe les résultats des mesures contre l'air avec
➢ l'alcoxyamine (I)
➢ le SDS

**Tableau 1**

| Expt. | Interface | CMC (mol.L⁻¹) | γ_{30 min} (mN/m) |
|---|---|---|---|
| SDS | air | 6,3×10⁻³ | 40,8 |
| Alcoxyamine (I) | air | 6,5×10⁻² | 36,2 |

Cette mesure démontre bien que l'alcoxyamine peut participer à la stabilisation de l'émulsion puisqu'elle possède un caractère tensioactif prononcé.

### Exemple 3 Polymérisation radicalaire contrôlée de l'acrylate de butyle en batch amorcée par l'alcoxyamine hydrosoluble (I) préparée en 1 A par la technique mini-émulsion - Conversion des monomères résiduels par Polymérisation radicalaire conventionnelle avec du persulfate d'ammonium

D'une part, on prépare une solution organique en mélangeant :
- 85 g (soit 0,7 mol) d'acrylate de butyle,
- 0,11 g de polystyrène de masse moléculaire moyenne en poids (Mw) de 330.000,
- 0,68 g (soit 3,0 mmol) d'hexadécane,

D'autre part, on prépare une solution aqueuse en mélangeant :
- 323 g d'eau,
- 1,87 g (soit 2,3 mmol) d'agent émulsifiant Dowfax 8390,
- 0,32 g (soit 3,8 mmol) de NaHCO₃,
- 0,98 g (soit 2,6 mmol) d'alcoxyamine (I) préparée en 1 A neutralisée par un excès (1,7 équivalent) de soude caustique.

Ces deux solutions sont ensuite mélangées à l'aide d'une agitation magnétique pendant 10 min. Le mélange est ensuite soumis à une forte turbulence par une sonde ultra-son (Branson 450, puissance 7) pendant 10 min de façon à obtenir une émulsion dont la taille des gouttes est de l'ordre de 10 nm.

L'émulsion est ensuite introduite dans un réacteur de 500 mL équipé d'une double enveloppe, et dégazée à l'azote pendant 10 min. Le milieu réactionnel est alors porté à 112 °C et cette température est maintenue par régulation thermique pendant 8 heures. Des prélèvements sont réalisés tout au long de la réaction afin de :
- déterminer la cinétique de la polymérisation par gravimétrie (mesure d'extraits secs),
- suivre l'évolution des masses moléculaires en fonction de la conversion.

Le tableau 2 ci-dessous présente l'évolution cinétique de la polymérisation, ainsi que l'évolution des masses molaires en fonction de la conversion. On constate que la conversion atteint 90 % en 8h de polymérisation.

**Tableau 2**

| Temps (h) | Conversion (%) | Mn | Mw | Ip |
|---|---|---|---|---|
| 1 | 21,7 | 10.300 | 16.200 | 1,6 |
| 1,5 | 38,3 | 17.000 | 22.500 | 1,3 |
| 2 | 51,9 | 20.400 | 26.200 | 1,3 |
| 2,5 | 61,1 | 22.600 | 28.800 | 1,3 |
| 4 | 76,4 | 28.900 | 35.400 | 1,2 |
| 8 | 89,7 | 36.100 | 49.300 | 1,4 |

### Caractéristiques latex par CHDF (Capillary Hydrodynamic Fractionation)

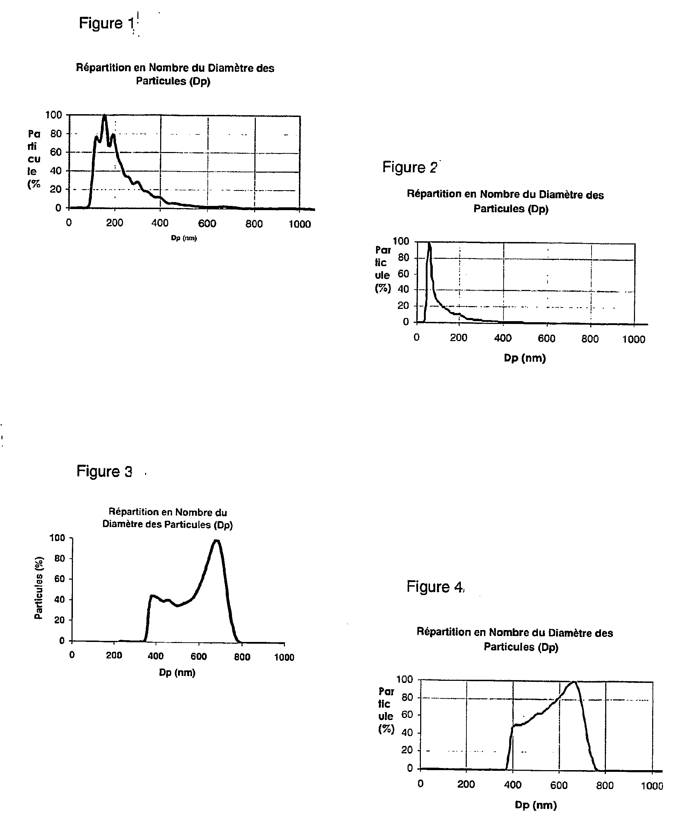

Cf Figure 1

Les 10% de monomères résiduels sont alors convertis, dans une 2^{ème} étape par polymérisation radicalaire conventionnelle en présence de persulfate de potassium (ALDRICH - 0.5 % molaire par rapport aux monomères résiduels). Après dégazage à l'azote pendant 10 min sous agitation, le milieu réactionnel est alors chauffé à 75 °C pendant 4 h, puis refroidi à température ambiante. La conversion obtenue évaluée par gravimétrie est alors supérieure à 98% en poids.

### Exemple 4 Polymérisation radicalaire contrôlée du styrène en batch amorcée par l'alcoxyamine hydrosoluble (I) préparée en 1 A par la technique mini-émulsion

D'une part, on prépare une solution organique en mélangeant :
- 85 g (soit 0,8 mol) de styrène,
- 0,85 g de polystyrène de Mw de 330.000,
- 4,26 g (soit 19,0 mmol) d'hexadécane,

D'autre part, on prépare une solution aqueuse en mélangeant :
- 317 g d'eau,
- 1,87 g (soit 2,3 mmol) d'agent émulsifiant Dowfax 8390,
- 0,32 g (soit 3,8 mmol) de NaHCO₃,
- 0,96 g (soit 2,5 mmol) d'alcoxyamine (I) préparée en 1 A neutralisée par un excès (1,7 eq.) de soude caustique.

Ces deux solutions sont ensuite mélangées à l'aide d'une agitation magnétique pendant 10·min. Le mélange est ensuite soumis à une forte turbulence par une sonde ultra-son (Branson 450, puissance 7) pendant 10 min de façon à obtenir une émulsion dont la taille des gouttes est de l'ordre de 10 nm.

L'émulsion est ensuite introduite dans un réacteur de 500 mL équipé d'une double enveloppe, et dégazée à l'azote pendant 10 min. Le milieu réactionnel est alors porté à 120 °C et cette température est maintenue par régulation thermique pendant 8 h. Des prélèvements sont réalisés tout au long de la réaction afin de :
- déterminer la cinétique de la polymérisation par gravimétrie (mesure d'extraits secs),
- suivre l'évolution des masses moléculaires en fonction de la conversion.

Le tableau 4 ci-dessous présente l'évolution des masses molaires en fonction de la conversion. On constate que la conversion atteint 50 % en 8h de polymérisation.

**Tableau 4**

| Temps (h) | Conversion (%) | Mn | Mw | Ip |
|---|---|---|---|---|
| 2,5 | 12,9 | 13.800 | 17.100 | 1,24 |
| 4,25 | 21,7 | 19.700 | 24.100 | 1,22 |
| 5 | 28.5 | 23.400 | 28.600 | 1,22 |
| 6 | 35,5 | 26.700 | 33.500 | 1,25 |
| 8 | 50,3 | 34.200 | 44.100 | 1,29 |

### Caractéristiques du latex par CHDF (Capillary Hydrodynamic Fractionation) :

Cf Figure 2

### Exemple 5 Polymérisation radicalaire contrôlée de l'acrylate de butyle en batch amorcée par l'alcoxyamine hydrosoluble (I) préparée en 1 A par la technique émulsion

85 g (soit 0,66 mol) d'acrylate de butyle, 322 g d'eau, 1,87 g (soit 2,3 mmol) d'agent émulsifiant Dowfax 8390, 0,33 g (soit 3,9 mmol) de NaHCO₃, et 0,96 g (soit 2,5 mmol) d'alcoxyamine (I) préparée en 1 A neutralisée par un excès (1,7eq.) de soude caustique sont introduits dans un réacteur de 500 ml équipé d'une double enveloppe. La solution est dégazée à l'azote pendant 10 min. Le milieu réactionnel est alors porté à 112 °C et cette température est maintenue par régulation thermique pendant 7 heures.

Des prélèvements sont réalisés tout au long de la réaction afin de :
- déterminer la cinétique de la polymérisation par gravimétrie (mesure d'extraits secs),
- suivre l'évolution des masses moléculaires en fonction de la conversion.

Le tableau 5 ci-dessous présente l'évolution des masses molaires en fonction de la conversion. On constate que la conversion atteint 65 % en 7h de polymérisation.

**Tableau 5**

| Temps (h) | Conversion (%) | Mn | Mw | Ip |
|---|---|---|---|---|
| 2 | 16,2 | 10.100 | 13.100 | 1,30 |
| 2,5 | 25,5 | 12.400 | 15.700 | 1,27 |
| 3 | 31,8 | 14.700 | 17.900 | 1,22 |
| 4 | 50,0 | 17.700 | 21.600 | 1,22 |
| 5 | 59,1 | 21.800 | 26.200 | 1,20 |
| 7 | 64,8 | 28.200 | 34.000 | 1,21 |

Le latex est stable plusieurs jours à température ambiante et le polymère est récupéré par coagulation à basse température (-10 °C)

### Exemple 6 Polymérisation radicalaire contrôlée de l'acrylate de butyle par la technique émulsion amorcée par l'alcoxyamine hydrosoluble (I) préparée en 1 A à partir d'une semence d'acrylate de butyle suivie d'une addition batch d'acrylate de butyle (ABu)

La synthèse se fait en 2 étapes :
➢ 1^{ère} étape : préparation d'une semence à faible taux de solides (environ 1 % en poids)
   3 g (soit 0,02 mol) d'acrylate de butyle, 409 g d'eau, 1,87 g (soit 2,3 mmol) d'agent émulsifiant Dowfax 8390, 0,43 g (soit 5,1 mmol) de NaHCO₃, et 0,95 g (soit 2,5 mmol) d'alcoxyamine (I) préparée en 1 A neutralisée par un excès (1,7eq.) de soude caustique sont introduits dans un réacteur de 500 ml équipé d'une double enveloppe. La solution est dégazée à l'azote pendant 10 min. Le milieu réactionnel est alors porté à 112 °C et cette température est maintenue par régulation thermique pendant 8 h.
➢ 2^{ème} étape : addition séquencée de l'ABu en émulsion
   30 g (soit 0,23 mol) d'acrylate de butyle sont additionnés à la semence précédente. Après dégazage à l'azote, le milieu réactionnel est porté à 112 °C et cette température est maintenue par régulation thermique pendant 8 h.

Des prélèvements sont réalisés tout au long de la réaction afin de :
- déterminer la cinétique de la polymérisation par gravimétrie (mesure d'extraits secs),
- suivre l'évolution des masses moléculaires en fonction de la conversion.

Le tableau 6 et la Figure 3 ci-dessous présentent l'évolution cinétique de la polymérisation ainsi que l'évolution des masses molaires en fonction de la conversion. On constate que la conversion atteint 94 % en 8h de polymérisation.

**Tableau 6**

| Temps (h) | Conversion (%) | Mn | Mw | Ip |
|---|---|---|---|---|
| 1,5 | 20,8 | 10.210 | 14.280 | 1,40 |
| 3 | 45,9 | 19.010 | 24.820 | 1,31 |
| 4,5 | 78,3 | 30.290 | 43.250 | 1,43 |
| 6 | 91,5 | 37.670 | 64.430 | 1,71 |
| 8 | 94,8 | 40.370 | 68.430 | 1,70 |

### + Caractéristiques latex par CHDF (Capillary Hydrodynamic Fractionation)

Cf Figure 3

### Exemple 7 Polymérisation radicalaire contrôlée de l'acrylate de butyle par la technique émulsion amorcée par l'alcoxyamine hydrosoluble (I) préparée en 1 A à partir d'une semence d'acrylate de butyle suivie d'une addition continue d'acrylate de butyle

La préparation de la semence d'acrylate de butyle à faible taux de solides (environ 1 % en masse) est similaire à celle décrite dans l'exemple 6. Néanmoins, la régulation thermique à 112 °C n'est maintenue qu'une heure avant de démarrer l'addition des 30 g (soit 0,23 mol) d'acrylate de butyle en continu sur une durée de 3 h à 112 °C. Cette température est alors maintenue par régulation thermique pendant 8 heures.

Des prélèvements sont réalisés tout au long de la réaction afin de :
- déterminer la cinétique de la polymérisation par gravimétrie (mesure d'extraits secs),
- suivre l'évolution des masses moléculaires en fonction de la conversion.

Le tableau 7 et les courbes de la Figure 4 ci-dessous présentent l'évolution cinétique de la polymérisation, ainsi que l'évolution des masses molaires en fonction de la conversion. On constate que la conversion atteint 95 % en 8h de polymérisation.

**Tableau 7**

| Temps (h) | Conversion (%) | Mn | Mw | Ip |
|---|---|---|---|---|
| | | | | |
| 2,5 | 7,4 | 3.101 | 5.830 | 1,9 |
| 4,3 | 21,7 | 8.552 | 12.400 | 1,5 |
| 5 | 68,4 | 23.210 | 30.110 | 1,3 |
| 6 | 83,1 | 32.560 | 43.310 | 1,3 |
| 8 | 94,8 | 38.530 | 57.370 | 1,5 |

### Caractérisation du latex par CHDF (Capillary Hydrodynamic Fractionation) :

Cf Figure 4

### Exemple 8 Polymérisation radicalaire contrôlée du styrène par la technique émulsion amorcée par l'alcoxyamine hydrosoluble (I) préparée en 1 A à partir d'une semence d'acrylate de butyle suivie d'une addition batch de styrène

La synthèse se fait en 2 étapes :
➢ 1^{ère} étape : préparation d'une semence d'acrylate de butyle à faible taux de solides (environ 1% en masse)
   0,7 g (soit 0,005 mol) d'acrylate de butyle, 90 g d'eau, 1,18 g (soit 1,4 mmol) d'agent émulsifiant Dowfax 8390, 0,09 g (soit 1,1 mmol) de NaHCO₃, et 0,21 g (soit 0,55 mmol) d'alcoxyamine (I) préparée en 1 A neutralisée par un excès (1,7eq.) de soude caustique sont introduits dans un réacteur de 250 ml équipé d'une double enveloppe. La solution est dégazée à l'azote pendant 10 min. Le milieu réactionnel est alors porté à 112 °C et cette température est maintenue par régulation thermique pendant 8 h.
➢ 2^{ème} étape : addition batch du styrène
   18 g (soit 0,17 mol) de styrène sont additionnés à la semence précédente. Après dégazage à l'azote, le milieu réactionnel est porté à 120 °C et cette température est maintenue par régulation thermique pendant 8 h.

Des prélèvements sont réalisés tout au long de la réaction afin de :
- déterminer la cinétique de la polymérisation par gravimétrie (mesure d'extraits secs),
- suivre l'évolution des masses moléculaires en fonction de la conversion.

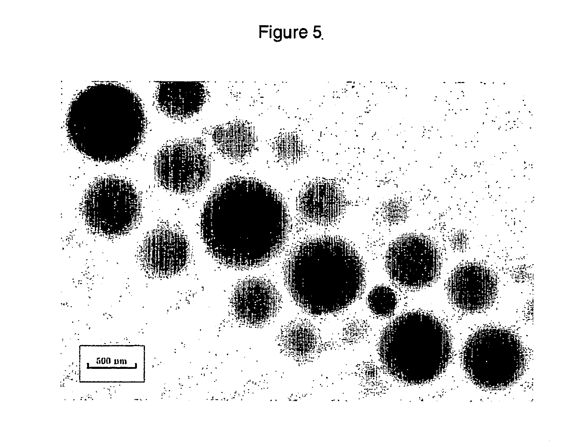

Le tableau 8 et le cliché de la Figure 5 ci-dessous présentent l'évolution cinétique de la polymérisation, ainsi que l'évolution des masses molaires en fonction de la conversion. On constate que la conversion atteint 87 % en 8h de polymérisation.

**Tableau 8**

| Temps (h) | Conversion (%) | Mn | Mw | Ip |
|---|---|---|---|---|
| 1,5 | 25,8 | 12.600 | 16.400 | 1,30 |
| 3 | 53,6 | 22.200 | 28.600 | 1,29 |
| 4,5 | 69,9 | 30.520 | 38.820 | 1,27 |
| 6,3 | 84,9 | 36.500 | 47.200 | 1,29 |
| 8 | 87,0 | 39.240 | 51.510 | 1,31 |

### Caractérisation du latex par microscopie électronique à transmission

Cf Figure 5

## Revendications

1. Procédé de polymérisation d'au moins un monomère polymérisable par voie radicalaire en micro-émulsion ou émulsion, **caractérisé en ce qu'**il est mis en oeuvre en présence d'au moins une alcoxyamine hydrosoluble, choisie parmi
une monoalcoxyamine de formule (I) 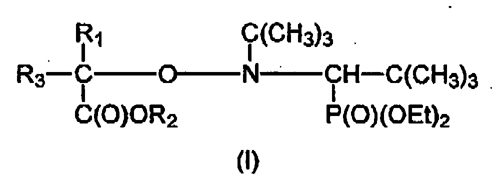 dans laquelle *R₁ et R₃, identiques ou différents, représentent un radical alkyle, linéaire ou ramifié, ayant un nombre d'atomes de carbone allant de 1 à 3,
*R₂ représente un métal alcalin tel que Li, Na, K, un ion ammonium tel que NH₄⁺, NBu₄⁺, NHBu₃⁺),
ou une mono- ou une polyalcoxyamine de formule (II) 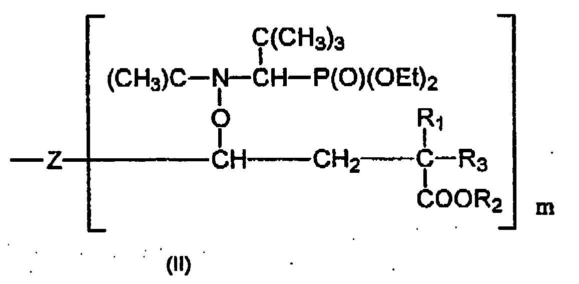 où m est un entier supérieur ou égal à 1, de préférence supérieur ou égal à 2,
et R₁, R₂ et R₃ ont la même signification que dans la formule (I)

2. Procédé selon la revendication 1, **caractérisé en ce que** l'alcoxyamine hydrosoluble est introduite dans le milieu de polymérisation à raison de 0,01 % à 10 %, de préférence 0,1 à 5 %, en masse par rapport à la masse de monomère(s).

3. Procédé selon la revendication 1 ou 2, **caractérisé en ce que** le ou les monomères polymérisables par voie radicalaire sont choisis parmi les monomères présentant une double liaison carbone-carbone susceptible de polymériser par voie radicalaire, et notamment parmi les monomères vinylaromatiques tels que le styrène ou les styrènes substitués notamment l'a-méthylstyrène et le styrène sulfonate de sodium, les diènes tels que le butadiène ou l'isoprène, les monomères acryliques tel que l'acide acrylique ou ses sels, les acrylates d'alkyle, de cycloalkyle ou d'aryle tels que l'acrylate de méthyle, d'éthyle, de butyle, d'éthylhexyle ou de phényle, les acrylates d'hydroxyalkyle tel que l'acrylate de 2-hydroxyéthyle, les acrylates d'étheralkyle tel que l'acrylate de 2-méthoxyéthyle, les acrylates d'alcoxy- ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxy-polyéthylèneglycol-polypropylèneglycol ou leurs mélanges, les acrylates d'aminoalkyle tel que l'acrylate de 2-(diméthylamino)éthyle (ADAME), les acrylates de sel d'amines tels que le chlorure ou le sulfate de [2-(acryloyloxy)éthyl]triméthylammonium ou le chlorure ou le sulfate de [2-(acryloyloxy)éthyl]diméthylbenzylammonium, les acrylates fluorés, les acrylates silylés, les acrylates phosphorés tels que les acrylates de phosphate d'alkylèneglycol, les monomères méthacryliques comme l'acide méthacrylique ou ses sels, les méthacrylates d'alkyle, de cycloalkyle, d'alkényle ou d'aryle tels que le méthacrylate de méthyle, de lauryle, de cyclohexyle, d'allyle ou de phényle, les méthacrylates d'hydroxyalkyle tel que le méthacrylate de 2-hydroxyéthyle ou le méthacrylate de 2-hydroxypropyle, les méthacrylates d'étheralkyle tel que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxypolyethylèneglycol-polypropylèneglycol ou leurs mélanges, les méthacrylates d'aminoalkyle tel que le méthacrylate de 2-(diméthylamino)éthyle (MADAME), les méthacrylates de sel d'amines tels que le chlorure ou le sulfate de [2-(méthacryloyloxy)éthyl]triméthylammonium ou le chlorure ou le sulfate de [2-(méthacryloyloxy)éthyl]diméthylbenzylammonium, les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, l'acrylamide ou les acrylamides substitués, la 4-acryloylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide ou les méthacrylamides substitués, le N-méthylolméthacrylamide, le chlorure de méthacrylamidopropyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, les (alkoxy) poly(alkylène glycol) vinyl éther ou divinyl éther, tels que le méthoxy poly(éthylène glycol) vinyl éther, le poly(éthylène glycol) divinyl éther, parmi les monomères vinylaromatiques tels que le styrène ou les styrènes substitués notamment l'a-méthylstyrène et le styrène sulfonate de sodium, les diènes tels que le butadiène ou l'isoprène, les monomères acryliques tel que l'acide acrylique ou ses sels, les acrylates d'alkyle, de cycloalkyle ou d'aryle tels que acrylate de méthyle, d'éthyle, de butyle, d'éthylhexyle ou de phényle, les acrylates d'hydroxyalkyle tel que l'acrylate de 2-hydroxyéthyle, les acrylates d'étheralkyle tel que l'acrylate de 2-méthoxyéthyle, les acrylates d'alcoxy- ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxy-polyéthylèneglycol-polypropylèneglycol ou leurs mélanges, les acrylates d'aminoalkyle tel que l'acrylate de 2-(diméthylamino)éthyle (ADAME), les acrylates de sel d'amines tels que le chlorure ou le sulfate de [2-(acryloyloxy)éthyl]triméthylammonium ou le chlorure ou le sulfate de [2-(acryloyloxy)éthyl]diméthylbenzylammonium, les acrylates fluorés, les acrylates silylés, les acrylates phosphorés tels que les acrylates de phosphate d'alkylèneglycol, les monomères méthacryliques comme l'acide méthacrylique ou ses sels, les méthacrylates d'alkyle, de cycloalkyle, d'alkényle ou d'aryle tels que le méthacrylate de méthyle, de lauryle, de cyclohexyle, d'allyle ou de phényle, les méthacrylates d'hydroxyalkyle tel que le méthacrylate de 2-hydroxyéthyle ou le méthacrylate de 2-hydroxypropyle, les méthacrylates d'étheralkyle tel que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxypolyethylèneglycol-polypropylèneglycol ou leurs mélanges, les méthacrylates d'aminoalkyle tel que le méthacrylate de 2-(diméthylamino)éthyle (MADAME), les méthacrylates de sel d'amines tels que le chlorure ou le sulfate de [2-(méthacryloyloxy)éthyl]triméthylammonium ou le chlorure ou le sulfate de [2-(méthacryloyloxy)éthyl]diméthylbenzylammonium, les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, l'acrylamide ou les acrylamides substitués, la 4-acrybylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide ou les méthacrylamide substitués, le N-méthylolméthacrylamide, le chlorure de méthacrylamidopropyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, les (alkoxy) poly(alkylène glycol) vinyl éther ou divinyl éther, tels que le méthoxy poly(éthylène glycol) vinyl éther, le poly(éthylène glycol) divinyl éther, les monomères oléfiniques, tels que l'éthylène, le butène, l'hexène et le 1-octène ainsi que les monomères oléfiniques fluorés, les monomères vinylidéniques, tels que le fluorure de vinylidène ;seuls ou en mélange d'au moins deux monomères précités.

4. Procédé selon l'une quelconque des revendications 1 à 3, **caractérisé en ce qu'**on mélange sous agitation, une phase aqueuse comprenant :
- de l'eau,
- au moins une alcoxyamine hydrosoluble telle que définie précédemment,
- éventuellement un agent émulsifiant, anionique, cationique ou non ionique, amphotère ou quaternaire ou fluoré,
et une phase organique comprenant :
- le(s) monomère(s) polymérisable(s),
- un éventuel solvant organique,
et éventuellement au moins un initiateur de radicaux libres de type peroxydique organique et/ou minéral et/ou de type azoïque.

5. Procédé de préparation de polymères multiblocs, **caractérisé en ce que** dans une première étape on prépare un premier bloc à partir d'un ou plusieurs monomères selon le procédé décrit dans l'une quelconque des revendications 1 à 4, puis on introduit un second monomère ou un mélange de monomères -différent du monomère ou du mélange de monomères ayant servi à la réalisation du 1^{er} bloc - destiné à la réalisation du second bloc, sans arrêter l'agitation et sans refroidissement ou autre interruption, suivi éventuellement de l'introduction d'un monomère ou un mélange de monomères -différents du monomère ou du mélange de monomères ayant servi à la réalisation du 2ème bloc, etc.., étant entendu, que suivant la nature des monomères, les conditions de constitution de chacun des blocs seront adaptées, éventuellement suivi par une étape de conversion des monomères résiduels en utilisant un apport supplémentaire d'initiateur(s) de radicaux libres de type peroxydique organique et/ou minéral et/ou de type azoïque.

6. Particule de polymère, **caractérisée en ce qu'**elle comprend un polymère susceptible d'être obtenu selon le procédé décrit dans les revendications 1 à 5.

7. Particule selon la revendication 6, **caractérisée en ce que** le polymère est un polymère à blocs.

8. Particule selon la revendication 7, **caractérisée en ce que** le polymère est l'un des suivants:
polystyrène-b-polyméthacrylate de méthyle,
polystyrène-polystyrènesulfonate,
polystyrène-b-polyacrylamide,
polystyrène-b-polméthacrylamide,
polyméthacrylate de méthyle-b-polyacrylate d'éthyle,
polystyrène-b-polyacrylate de butyle,
polybutadiène-b-polyméthacrylate de méthyle,
polyisoprène-b-polystyrène-co-acrylonitrile,
polybutadiène-b-polystyrène-co-acrylonitrile,
polystyrène-co-acrylate de butyle-b-polyméthacrylate de méthyle,
polystyrène-b-polyacétate de vinyle,
polystyrène-b-polyacrylate de 2-hexyléthyle,
polystyrène-b-polyméthacrylate de méthyle-co-acrylate d'hydroxyéthyle,
polystyrène-b-polybutadiène-b-polyméthacrylate de méthyle,
polybutadiène-b-polystyrène-b-polyméthacrylate de méthyle,
polystyrène-b-polyacrylate de butyle-b-polystyrène,
polystyrène-b-polybutadiène-b-polystyrène,
polystyrène-b-polyisoprène-b-polystyrène,
polyacrylate de perfluorooctyle-b-polyméthacrylate de méthyle,
polyacrylate de perfluorooctyle-b-polystyrène,
polyacrylate de perfluorooctyle-b-acrylate de behenyle,
polyacrylate de perfluorooctyle-b-méthacrylate de stéaryle,
polyacrylate de n-octyle-b-méthacrylate de méthyle,
polyméthacrylate de méthyle-b-polyacrylate de butyle-b-polyméthacrylate de méthyle,
polyméthacrylate de méthyle-b-polyacrylate de méthoxyéthyl-b-polyacrylate de méthyle,
polyacide (méth)acrylique-b-polyacrylate de butyle-b-polyacide(méth)acrylique.

9. Ensemble de particules selon la revendication 6 à 8, **caractérisé en ce que** le diamètre moyen desdites particules est inférieur ou égal à 2 µm, de préférence compris entre 20 et 1.000 nm.

10. Latex comprenant un ensemble de particules tel que défini à la revendication 9.

## Claims

1. Process for the microemulsion or emulsion polymerization of at least one monomer which can be polymerized by the radical route, **characterized in that** it is carried out in the presence of at least one water-soluble alkoxyamine chosen from:
a monoalkoxyamine of formula (I) 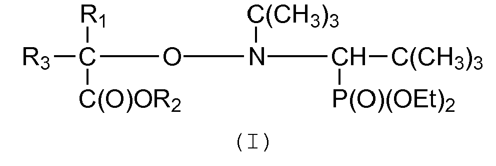 in which
* R₁ and R₃, which are identical or different, represent a linear or branched alkyl radical having a number of carbon atoms ranging from 1 to 3,
* R₂ represents an alkali metal, such as Li, Na or K, or an ammonium ion, such as NH₄⁺, NBu₄⁺ or NHBu₃⁺,
or a mono- or a polyalkoxyamine of formula (II) 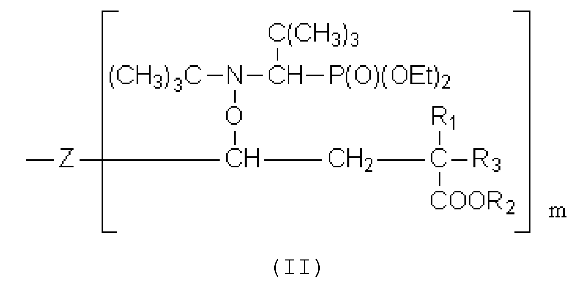
where m is an integer of greater than or equal to 1, preferably of greater than or equal to 2, and R₁, R₂ and R₃ have the same meaning as in the formula (I).

2. Process according to Claim 1, **characterized in that** the water-soluble alkoxyamine is introduced into the polymerization medium in a proportion of 0.01% to 10%, preferably 0.1 to 5%, by weight, with respect to the weight of monomer(s).

3. Process according to Claim 1 or 2, **characterized in that** the monomer or monomers which can be polymerized by the radical route are chosen from monomers exhibiting a carbon-carbon double bond capable of polymerizing by the radical route and in particular from vinylaromatic monomers, such as styrene or substituted styrenes, in particular α-methylstyrene and sodium styrenesulfonate, dienes, such as butadiene or isoprene, acrylic monomers, such as acrylic acid or its salts, alkyl, cycloalkyl or aryl acrylates, such as methyl, ethyl, butyl, ethylhexyl or phenyl acrylate, hydroxyalkyl acrylates, such as 2-hydroxyethyl acrylate, ether alkyl acrylates, such as 2-methoxyethyl acrylate, alkoxy- or aryloxypolyalkylene glycol acrylates, such as methoxypolyethylene glycol acrylates, ethoxypolyethylene glycol acrylates, methoxypolypropylene glycol acrylates, methoxypolyethylene glycol-polypropylene glycol acrylates or their mixtures, aminoalkyl acrylates, such as 2-(dimethylamino)ethyl acrylate (ADAME), acrylates of amine salts, such as [2-(acryloyloxy)ethyl]-trimethylammonium chloride or sulfate or [2-(acryloyloxy)ethyl]dimethylbenzylammonium chloride or sulfate, fluoroacrylates, silylated acrylates or phosphorus-comprising acrylates, such as alkylene glycol acrylate phosphates, methacrylic monomers, such as methacrylic acid or its salts, alkyl, cycloalkyl, alkenyl or aryl methacrylates, such as methyl, lauryl, cyclohexyl, allyl or phenyl methacrylate, hydroxyalkyl methacrylates, such as 2-hydroxyethyl methacrylate or 2-hydroxypropyl methacrylate, ether alkyl methacrylates, such as 2-ethoxyethyl methacrylate, alkoxy- or aryloxypolyalkylene glycol methacrylates, such as methoxypolyethylene glycol methacrylates, ethoxypolyethylene glycol methacrylates, methoxypolypropylene glycol methacrylates, methoxypolyethylene glycol-polypropylene glycol methacrylates or their mixtures, aminoalkyl methacrylates, such as 2-(dimethylamino)ethyl methacrylate (MADAME), methacrylates of amine salts, such as [2-(methacryloyloxy)ethyl]trimethylammonium chloride or sulfate or [2-(methacryloyloxy)-ethyl]dimethylbenzylammonium chloride or sulfate, fluoromethacrylates, such as 2,2,2-trifluoroethyl methacrylate, silylated methacrylates, such as 3-methacryloyloxypropyltrimethylsilane, phosphorus-comprising methacrylates, such as alkylene glycol methacrylate phosphates, hydroxyethylimidazolidone methacrylate, hydroxyethylimidazolidinone methacrylate or 2-(2-oxo-1-imidazolidinyl)ethyl methacrylate, acrylonitrile, acrylamide or substituted acrylamides, 4-acryloylmorpholine, N-methylolacrylamide, acrylamidopropyltrimethylammonium chloride (APTAC), acrylamidomethylpropanesulfonic acid (AMPS) or its salts, methacrylamide or substituted methacrylamides, N-methylolmethacrylamide, methacrylamidopropyltrimethylammonium chloride (MAPTAC), itaconic acid, maleic acid or its salts, maleic anhydride, alkyl or alkoxy- or aryloxypolyalkylene glycol maleates or hemimaleates, vinylpyridine, vinylpyrrolidinone, (alkoxy)poly(alkylene glycol) vinyl ethers or divinyl ethers, such as methoxypoly(ethylene glycol) vinyl ether or poly(ethylene glycol) divinyl ether, olefinic monomers, such as ethylene, butene, hexene and 1-octene, as well as fluoroolefinic monomers and vinylidene monomers, such as vinylidene fluoride; alone or as a mixture of at least two abovementioned monomers.

4. Process according to any one of Claims 1 to 3, **characterized in that** the mixing is carried out, with stirring, of an aqueous phase comprising:
- water,
- at least one water-soluble alkoxyamine as defined above,
- optionally an anionic, cationic or nonionic, amphoteric or quaternary or fluorinated, emulsifying agent,
and an organic phase comprising:
- the polymerizable monomer(s),
- an optional organic solvent,
and optionally at least one free radical initiator of organic and/or inorganic peroxide type and/or of azo type.

5. Process for the preparation of multiblock polymers, **characterized in that**, in a first stage, a first block is prepared from one or more monomers according to the process described in any one of Claims 1 to 4, then a second monomer or a mixture of monomers (different from the monomer or from the mixture of monomers which was used for the preparation of the 1st block) intended for the preparation of the second block is introduced without halting the stirring and without cooling or other interruption, optionally followed by the introduction of a monomer or a mixture of monomers (different from the monomer or from the mixture of monomers which was used for the preparation of the 2nd block), and the like, it being understood that the conditions for forming each of the blocks will be adjusted depending on the nature of the monomers, optionally followed by a stage of conversion of the residual monomers using an additional supply of free radical initiator(s) of organic and/or inorganic peroxide type and/or of azo type.

6. Polymer particle, **characterized in that** it comprises a polymer capable of being obtained according to the process described in Claims 1 to 5.

7. Particle according to Claim 6, **characterized in that** the polymer is a block polymer.

8. Particle according to Claim 7, **characterized in that** the polymer is one of the following:
polystyrene-b-poly(methyl methacrylate),
polystyrene-b-polystyrenesulfonate,
polystyrene-b-polyacrylamide,
polystyrene-b-polymethacrylamide,
poly(methyl methacrylate)-b-poly(ethyl acrylate),
polystyrene-b-poly(butyl acrylate),
polybutadiene-b-poly(methyl methacrylate),
polyisoprene-b-poly(styrene-co-acrylonitrile),
polybutadiene-b-poly(styrene-co-acrylonitrile),
poly(styrene-co-butyl acrylate)-b-poly(methyl methacrylate),
polystyrene-b-poly(vinyl acetate),
polystyrene-b-poly(2-ethylhexyl acrylate),
polystyrene-b-poly(methyl methacrylate-co-hydroxyethyl acrylate),
polystyrene-b-polybutadiene-b-poly(methyl methacrylate),
polybutadiene-b-polystyrene-b-poly(methyl methacrylate),
polystyrene-b-poly(butyl acrylate)-b-polystyrene,
polystyrene-b-polybutadiene-b-polystyrene,
polystyrene-b-polyisoprene-b-polystyrene,
poly(perfluorooctyl acrylate)-b-poly(methyl methacrylate),
poly(perfluorooctyl acrylate)-b-polystyrene,
poly(perfluorooctyl acrylate)-b-poly(behenyl acrylate,
poly(perfluorooctyl acrylate)-b-poly(stearyl methacrylate),
poly(n-octyl acrylate)-b-poly(methyl methacrylate),
poly(methyl methacrylate)-b-poly(butyl acrylate)-b-poly(methyl methacrylate),
poly(methyl methacrylate)-b-poly(methoxyethyl acrylate)-b-poly(methyl acrylate),
poly((meth)acrylic acid)-b-poly(butyl acrylate)-b-poly((meth)acrylic acid).

9. Combination of particles according to Claims 6 to 8, **characterized in that** the mean diameter of said particles is less than or equal to 2 µm, preferably between 20 and 1000 nm.

10. Latex comprising a combination of particles as defined in Claim 9.

## Patentansprüche

1. Verfahren zur Polymerisation mindestens eines Monomers, das auf radikalischem Weg in Mikroemulsion oder Emulsion polymerisierbar ist, **dadurch gekennzeichnet, dass** es in Gegenwart mindestens eines wasserlöslichen Alkoxyamins durchgeführt wird, ausgewählt aus
einem Monoalkoxyamin der Formel (I) 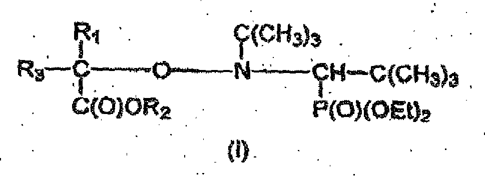 wobei ^{*} R₁ und R₃, gleich oder verschieden, für einen linearen oder verzweigten Alkylrest stehen, der eine Anzahl an Kohlenstoffatomen aufweist, die von 1 bis 3 reichen,
^{*} R₂ für ein alkalisches Metall, wie etwa Li, Na, K, ein Ammoniumion, wie etwa NH₄⁺, NBu4⁺, NHBu₃⁺) steht,
oder einem Mono- oder einem Polyalkoxyamin der Formel (II) 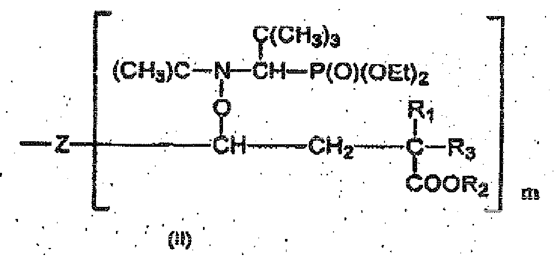 worin m eine ganze Zahl größer oder gleich 1, bevorzugt größer oder gleich 2 ist,
und R₁, R₂ und R₃ die gleiche Bedeutung haben wie in Formel (I).

2. Verfahren nach Anspruch 1, **dadurch gekennzeichnet, dass** das wasserlösliche Alkoxyamin in das Polymerisationsmedium in einem Anteil von 0,01 Masse-% bis 10 Masse-%, bevorzugt 0,1 bis 5 Masse-% bezogen auf die Masse des (der) Monomers (Monomere) eingeführt wird.

3. Verfahren nach Anspruch 1 oder 2, **dadurch gekennzeichnet, dass** das oder die Monomere, die auf radikalischem Weg polymerisierbar sind, aus Monomeren ausgewählt sind, die eine Kohlenstoff-Kohlenstoff-Doppelbindung aufweisen, die auf radikalischem Weg polymerisieren kann, und insbesondere aus den vinylaromatischen Monomeren, wie etwa Styrol oder substituierten Styrolen, insbesondere α-Methylstyrol und Natriumstyrolsulfonat, Dienen, wie etwa Butadien oder Isopren, Acrylmonomeren, wie etwa Acrylsäure oder deren Salze, Alkylacrylaten, Cycloalkylacrylaten oder Arylacrylaten, wie etwa Methylacrylat, Ethylacrylat, Butylacrylat, Ethylhexylacrylat oder Phenylacrylat, Hydroxyalkylacrylaten, wie etwa 2-Hydroxyethylacrylat, Etheralkylacrylaten, wie etwa 2-Methoxyethylacrylat, Alkoxypolyalkylenglykolacrylaten oder Aryloxypolyalkylenglycolacrylaten, wie etwa Methoxypolyethylenglycolacrylate, Ethoxypolyethylenglycolacrylate, Methoxypolypropylenglycolacrylate, Methoxypolyethylenglycolpolypropylenglycolacrylate oder deren Gemische, Aminoalkylacrylaten, wie etwa 2-(Dimethylamino)ethylacrylat (ADAME), Acrylaten der Aminsalze, wie etwa [2-(Acryloyloxy)ethyl]trimethylammoniumchlorid oder -sulfat oder [2-(Acryloyloxy)ethyl]dimethylbenzylammoniumchlorid oder -sulfat, fluorierten Acrylaten, silylierten Acrylaten, Phosphor enthaltenden Acrylaten, wie etwa Alkylenglycolacrylatphosphate, Methacrylmonomeren, wie Methacrylsäure oder deren Salze, Alkylmethacrylaten, Cycloalkylmethacrylaten, Alkenylmethacrylaten oder Arylmethacrylaten, wie etwa Methylmethacrylat, Laurylmethacrylat, Cyclohexylmethacrylat, Allylmethacrylat oder Phenylmethacrylat, Hydroxyalkylmethacrylaten, wie etwa 2-Hydroxyethylmethacrylat oder 2-Hydroxypropylmethacrylat, Etheralkylmethacrylaten, wie etwa 2-Ethoxyethylmethacrylat, Alkoxypolyalkylenglycol- oder Aryloxypolyalkylenglycolmethacrylaten, wie etwa Methoxypolyethylenglycolmethacrylate, Ethoxypolyethylenglycolmethacrylate, Methoxypolypropylenglycolmethacrylate, Methoxypolyethylenglycolpolypropylenglycolmethacrylate oder deren Gemische, Aminoalkylmethacrylaten, wie etwa 2-(Dimethylamino)ethylmethacrylat (MADAME), Methacrylaten der Aminsalze, wie etwa [2-(Methacryloyloxy)ethyl]trimethylammoniumchlorid oder -sulfat oder [2-(Methacryloyloxy)ethyl]-dimethylbenzylammoniumchlorid oder -sulfat, fluorierten Methacrylaten, wie etwa 2,2,2-Trifluorethylmethacrylat, silylierten Methacrylaten, wie etwa 3-Methacryloylpropyltrimethylsilan, Phosphor enthaltenden Methacrylaten, wie etwa Alkylenglycolmethacrylatphosphate, Hydroxyethylimidazolidonmethacrylat, Hydroxyethylimidazolidinonmethacrylat, 2-(2-Oxo-1-imidazolidinyl)ethylmethacrylat, Acrylonitril, Acrylamid oder substituierten Acrylamiden, 4-Acryloylmorpholin, N-Methylolacrylamid, Acrylamidopropyltrimethylammoniumchlorid (APTAC), Acrylamidomethylpropansulfonsäure (AMPS) oder deren Salze, Methacrylamid oder substituierten Methacrylamiden, N-Methylolmethacrylamid, Methacrylamidopropyltrimethylammoniumchlorid (MAPTAC), Itaconsäure, Maleinsäure oder deren Salze, Maleinsäureanhydrid, Alkylpolyalkylenglycolmaleaten oder Alkoxypolyalkylenglycolmaleaten oder Aryloxypolyalkylenglycolmaleaten oder Alkylpolyalkylenglycolhemimaleaten, Alkoxypolyalkylenglycolhemimaleaten, Aryloxypolyalkylenglycolhemimaleaten, Vinylpyridin, Vinylpyrrolidinon, (Alkoxy)poly(alkylenglycol)vinylether oder -divinylether, wie etwa Methoxypoly(ethylenglycol)vinylethern, Poly(ethylenglycol)divinylethern, aus den vinylaromatischen Monomeren, wie etwa Styrol oder den substituierten Styrolen, insbesondere α-Methylstyrol und Natriumstyrolsulfonat, Dienen, wie etwa Butadien oder Isopren, Acrylmonomeren, wie etwa Acrylsäure oder deren Salze, Alkylacrylaten, Cycloalkylacrylaten oder Arylacrylaten, wie etwa Methylacrylat, Ethylacrylat, Butylacrylat, Ethylhexylacrylat oder Phenylacrylat, Hydroxyalkylacrylaten, wie etwa 2-Hydroxyethylacrylat, Etheralkylacrylaten, wie etwa 2-Methoxyethylacrylat, Alkoxypolyalkylenglycolacrylaten oder Aryloxypolyalkylenglycolacrylaten, wie etwa Methoxypolyethylenglycolacrylate, Ethoxypolyethylenglycolacrylate, Methoxypolypropylenglycolacrylate, Methoxypolyethylenglycolpolypropylenglycolacrylate oder deren Gemische, Aminoalkylacrylaten, wie etwa 2-(Dimethylamino)ethylacrylat (ADAME), Acrylaten der Aminsalze, wie etwa [2-(Acryloyloxy)ethyl]trimethylammoniumchlorid oder -sulfat oder [2-(Acryloyloxy)ethyl]dimethylbenzylammoniumchlorid oder -sulfat, fluorierten Acrylaten, silylierten Acrylaten, Phosphor enthaltenden Acrylaten, wie etwa Alkylenglycolacrylatphosphate, Methacrylmonomeren, wie Methacrylsäure oder deren Salze, Alkylmethacrylaten, Cycloalkylmethacrylaten, Alkenylmethacrylaten oder Arylmethacrylaten, wie etwa Methylmethacrylat, Laurylmethacrylat, Cyclohexylmethacrylat, Allylmethacrylat oder Phenylmethacrylat, Hydroxyalkylmethacrylaten, wie etwa 2-Hydroxyethylmethacrylat oder 2-Hydroxypropylmethacrylat, Etheralkylmethacrylaten, wie etwa 2-Ethoxyethylmethacrylat, Alkoxypolyalkylenglycol- oder Aryloxypolyalkylenglycolmethacrylaten, wie etwa Methoxypolyethylenglycolmethacrylate, Ethoxypolyethylenglycolmethacrylate, Methoxypolypropylenglycolmethacrylate, Methoxypolyethylenglycolpolypropylenglycolmethacrylate oder deren Gemische, Aminoalkylmethacrylaten, wie etwa 2-(Dimethylamino)ethylmethacrylat (MADAME), Methacrylaten der Aminsalze, wie etwa [2-(Methacryloyloxy)ethyl]trimethylammoniumchlorid oder -sulfat oder [2-(Methacryloyloxy)ethyl]dimethylbenzylammoniumchlorid oder -sulfat, fluorierten Methacrylaten, wie etwa 2,2,2-Trifluorethylmethacrylat, silylierten Methacrylaten, wie etwa 3-Methacryloylpropyltrimethylsilan, Phosphor enthaltenden Methacrylaten, wie etwa Alkylenglycolmethacrylatphosphaten, Hydroxyethylimidazolidonmethacrylat, Hydroxyethylimidazolidinonmethacrylat, 2-(2-Oxo-1-imidazolidinyl)ethylmethacrylat, Acrylonitril, Acrylamid oder substituierten Acrylamiden, 4-Acryloylmorpholin, N-Methylolacrylamid, Acrylamidopropyltrimethylammoniumchlorid (APTAC), Acrylamidomethylpropansulfonsäure (AMPS) oder deren Salze, Methacrylamid oder substituierten Methacrylamiden, N-Methylolmethacrylamid, Methacrylamidopropyltrimethylammoniumchlorid (MAPTAC), Itaconsäure, Maleinsäure oder deren Salze, Maleinsäureanhydrid, Alkylpolyalkylenglycolmaleaten oder Alkoxypolyalkylenglycolmaleaten oder Aryloxypolyalkylenglycolmaleaten oder Alkylpolyalkylenglycolhemimaleaten, Alkoxypolyalkylenglycolhemimaleaten, Aryloxypolyalkylenglycolhemimaleaten, Vinylpyridin, Vinylpyrrolidinon, (Alkoxy)poly(alkylenglycol)vinylethern oder (Alkoxy)poly(alkylenglycol)divinylethern, wie etwa Methoxypoly(ethylenglycol)vinylether, Poly(ethylenglycol)divinylether, olefinischen Monomeren, wie etwa Ethylen, Buten, Hexen und 1-Octen sowie fluorierten olefinischen Monomeren, Vinylidenmonomeren, wie etwa Vinylidenfluorid; allein oder als Gemisch aus mindestens zwei der vorgenannten Monomere.

4. Verfahren nach einem der Ansprüche 1 bis 3, **dadurch gekennzeichnet, dass** unter Rühren eine wässrige Phase gemischt wird, umfassend:
- Wasser,
- mindestens ein wasserlösliches Alkoxyamin, wie zuvor definiert,
- optional ein anionischer, kationischer oder nicht ionischer, amphoterer oder quaternärer oder fluorierter Emulsionsbildner,
und eine organische Phase, umfassend:
- das (die) polymerisierbare(n) Monomer(e),
- optional ein organisches Lösemittel,
und optional mindestens einen Initiator freier Radikale vom Typ organisches und/oder mineralisches Peroxid oder vom Typ Azo.

5. Verfahren zur Herstellung von Multiblock-Polymeren, **dadurch gekennzeichnet, dass** in einem ersten Schritt ein erster Block aus einem oder mehreren Monomeren hergestellt wird, gemäß dem Verfahren das in einem der Ansprüche 1 bis 4 beschrieben wurde, dann ein zweites Monomer oder ein Gemisch aus Monomeren eingeführt wird - das sich von dem Monomer oder dem Gemisch aus Monomeren unterscheidet, das der Ausführung des ersten Blocks gedient hat - das zur Ausführung des zweiten Blocks bestimmt ist, ohne das Rühren zu unterbrechen und ohne Abkühlung oder eine andere Unterbrechung, optional gefolgt von der Einführung eines Monomers oder eines Gemischs aus Monomeren - das sich von dem Monomer oder dem Gemisch aus Monomeren unterscheidet, das der Ausführung des 2. Blocks gedient hat, usw., wobei sich versteht, dass je nach Art der Monomere, die Bedingungen für die Bildung jedes der Blöcke angepasst werden; optional gefolgt von einem Schritt der Umwandlung der restlichen Monomere unter Verwendung eines ergänzenden Zusatzes von Initiator(en) freier Radikale vom Typ organisches und/oder mineralisches Peroxid und/oder vom Typ Azo.

6. Polymerteilchen, **dadurch gekennzeichnet, dass** es ein Polymer umfasst, das gemäß dem Verfahren erhalten werden kann, das in den Ansprüchen 1 bis 5 beschrieben ist.

7. Teilchen nach Anspruch 6, **dadurch gekennzeichnet, dass** das Polymer ein Blockpolymer ist.

8. Teilchen nach Anspruch 7, **dadurch gekennzeichnet, dass** das Polymer eines der Folgenden ist:
Polystyrol-b-polymethylmethacrylat,
Polystyrol-b-polystyrolsulfonat,
Polystyrol-b-polyacrylamid,
Polystyrol-b-polymethacrylamid,
Polymethylmethacrylat-b-polyethylacrylat,
Polystyrol-b-polybutylacrylat,
Polybutadien-b-polymethylmethacrylat,
Polyisopren-b-polystyrol-co-acrylonitril,
Polybutadien-b-polystyrol-co-acrylonitril,
Polystyrol-co-butylacrylat-b-polymethylmethacrylat,
Polystyrol-b-polyvinylacetat,
Polystyrol-b-poly-2-hexylethylacrylat,
Polystyrol-b-polymethylmethacrylat-cohydroxyethylacrylat,
Polystyrol-b-polybutadien-b-polymethylmethacrylat,
Polybutadien-b-polystyrol-b-polymethylmethacrylat,
Polystyrol-b-polybutylacrylat-b-polystyrol,
Polystyrol-b-polybutadien-b-polystyrol,
Polystyrol-b-polyisopren-b-polystyrol,
Polyperfluorooctylacrylat-b-polymethylmethacrylat,
Polyperfluorooctylacrylat-b-polystyrol,
Polyperfluorooctylacrylat-b-behenylacrylat,
Polyperfluorooctylacrylat-b-stearylmethacrylat,
Poly-n-octylacrylat-b-methylmethacrylat,
Polymethylmethacrylat-b-polybutylacrylat-b-polymethylmethacrylat,
Polymethylmethacrylat-b-polymethoxyethylacrylat-b-polymethylacrylat,
Poly(meth)acrylsäure-b-polybutylacrylat-b-poly(meth)acrylsäure.

9. Komplex aus Teilchen nach Anspruch 6 bis 8, **dadurch gekennzeichnet, dass** der mittlere Durchmesser der Teilchen kleiner oder gleich 2 µm ist, bevorzugt im Bereich zwischen 20 und 1.000 nm.

10. Latex, der einen Komplex aus Teilchen umfasst, wie in Anspruch 9 definiert.
